# EUROPÄISCHE PATENTSCHRIFT

(11) **EP 1 270 345 B1**
(45) Veröffentlichungstag und Bekanntmachung des Hinweises auf die Patenterteilung: **22.02.2006**
(21) Anmeldenummer: 02012416.0
(22) Anmeldetag: 07.06.2002
(51) Int. Cl.: B60R 22/00, B60R 22/22, B60R 22/24

(54) **Sicherheitsgurtsystem**
Safety belt system
Système de ceinture de sécurité

(30) Priorität: 21.06.2001 FR 0108183
(43) Veröffentlichungstag der Anmeldung: 02.01.2003
(73) Patentinhaber: TRW Automotive GmbH, 73553 Alfdorf (DE)
(72) Erfinder: Marre, Bertrand, 95230 Soisy sous Montmorency (FR)
(74) Vertreter: Kitzhofer, Thomas

(56) Entgegenhaltungen:
- EP-A- 0 411 809
- EP-A- 0 911 227
- DE-A- 19 901 784
- FR-A- 2 655 300
- US-A- 4 147 387
- US-A- 4 482 187

## Beschreibung

Die Erfindung betrifft ein Sicherheitsgurtsystem mit einem Sicherheitsgurt, der einen Beckengurtabschnitt hat, welcher mit einem Endbeschlag verbunden ist.

Der Endbeschlag ist üblicherweise an einem Befestigungspunkt mit der Fahrzeugkarosserie verbunden. Dieser Befestigungspunkt bildet damit den unteren Lasteinleitungspunkt, an dem die Last vom Gurt auf das Fahrzeug übertragen wird. Bei den gängigen Sicherheitsgurtsystemen ist der Endbeschlag entweder direkt an der Fahrzeugkarosserie, beispielsweise an der B-Säule im Bereich des Türschwellers oder am Fahrzeugsitz befestigt. Die letztgenannte Lösung bietet zwar den Vorteil, daß der untere Lasteinleitungspunkt beim Verstellen des Sitzes wandert und somit die Richtung, unter welcher der Beckengurtabschnitt zum Sitz verläuft, gleich bleibt. Der Gurt muß jedoch am Sitz montiert werden, so daß dieser nicht ohne weiteres ausgetauscht werden kann. Außerdem durchspannt der Gurt im nicht angelegten Zustand den freien Raum zwischen B-Säule und Sitz, so daß insbesondere bei zwei- und dreitürigen Fahrzeugen die Einstiegsöffnung zu den Rücksitzen eingeengt ist.

Die US-A-4 147 387 zeigt ein Sicherheitsgurtsystem, nach dem Oberbegriff des Anspruchs 1 bei dem das Gurtband von einer Spule eines Gurtaufrollers zu einem oberen Umlenkbeschlag und durch diesen zu einer mit einem Gurtschloß verbindbaren Steckzunge verläuft. Von der Steckzunge verläuft das Gurtband als Beckengurtabschnitt über einen fahrzeugfesten unteren Umlenkbeschlag weiter zu einer zweiten Spule des Gurtaufrollers.

In der EP-A-0 411 809 ist ein Sicherheitsgurtsystem mit einem am. Sitz befestigten Endbeschlag in Form eines Führungsstabs dargestellt. Der Führungsstab verläuft durch eine abgenähte Schlaufe des Gurtbandes, die entlang des Führungsstabs verschiebbar ist.

Die Erfindung schafft ein Sicherheitsgurtsystem der eingangs genannten Art, bei dem sich der Verlauf des Gurtes im Beckengurtabschnitt der Größe des Fahrzeuginsassen und der Sitzposition anpassen kann, ohne daß der Endbeschlag am Sitz befestigt werden muß.

Dazu erstreckt sich bei einem Sicherheitsgurtsystem der eingangs genannten Art der Beckengurtabschnitt um einen am Fahrzeug befestigten Umlenkbügel herum zum Endbeschlag, der im Fahrzeug höher angebracht ist als der Umlenkbügel, wobei der Gurt sich längs des Umlenkbügels verschieben läßt. Auf diese Weise kann sich der untere Lasteinleitungspunkt des Beckengurtabschnitts (Kontaktstelle Umlenkbügel und Beckengurtabschnitt) beim Anlegen des Sicherheitsgurtes oder beim Verstellen des Sitzes entsprechend verschieben, so daß der Beckengurtabschnitt unabhängig von der Stellung des Sitzes und der Größe des angeschnallten Fahrzeuginsassen im wesentlichen immer gleich verläuft. Beim Ablegen kann der Gurt entlang des Umlenkbügels so weit nach hinten gleiten, daß der Ein- oder Ausstieg der Heckinsassen erleichtert ist.

Gemäß einer bevorzugten Ausführungsform ist vorgesehen, daß am Endbeschlag zur Verschiebung desselben ein erster Gurtstraffer angreift. Mit dem Gurtstraffer kann eine eventuell vorhandene Gurtlose aus dem Beckengurtabschnitt entfernt werden. Der Gurtstraffer kann fest am Fahrzeug angebracht sein und muß nicht über flexible Leitungen angeschlossen sein, wie es beispielsweise bei einer Befestigung am Fahrzeugsitz erforderlich wäre. Außerdem gestalten sich die Handhabung und Montage des Sitzes einfacher, wenn an diesem kein Gurtstraffer anzubringen und anzuschließen ist.

Weitere vorteilhafte Ausgestaltungen ergeben sich aus den Unteransprüchen.

Gemäß der bevorzugten Ausführungsform liegt der Beckengurtabschnitt an einem stangenförmigen, vorzugsweise im wesentlichen horizontal verlaufenden Abschnitt (Gleitstangenabschnitt) des Umlenkbügels an, wobei dieser Abschnitt zur guten Rückhaltung des Beckenbereichs unterhalb der Sitzfläche (Oberseite des Sitzteils des Fahrzeugsitzes) liegt.

Die Erfindung wird nachfolgend anhand bevorzugter Ausführungsformen ausführlich beschrieben. Dazu wird Bezug genommen auf die beigefügten Zeichnungen, in denen zeigen :
- Figur 1 eine schematische Seitenansicht eines Teils einer Fahrzeugkarosserie mit einem erfindungsgemäßen Sicherheitsgurtsystem im nicht angelegten Zustand;
- Figur 2 eine Frontansicht des Teils einer Fahrzeugkarosserie samt Sitz und Sicherheitsgurtsystem aus Figur 1;
- Figur 3 einen vergrößerten Querschnitt des Bereichs III aus Figur 2;
- Figur 4 eine Seitenansicht des Teils einer Fahrzeugkarosserie aus Figur 1 im angelegten Zustand des Sicherheitsgurtsystems;
- Figur 5 eine Frontansicht eines Teils einer Fahrzeugkarosserie mit einem Sicherheitsgurtsystem gemäß einer zweiten Ausführungsform der Erfindung;
- Figur 6 eine Seitenansicht des Teils einer Fahrzeugkarosserie aus Figur 5 im nicht angelegten Zustand des Sicherheitsgurtsystems;
- Figur 7 eine Seitenansicht des Teils einer Fahrzeugkarosserie aus Figur 6 im angelegten Zustand des Sicherheitsgurtsystems;
- Figur 8 eine Frontansicht eines Teils einer Fahrzeugkarosserie mit einem Sicherheitsgurtsystem gemäß einer dritten Ausführungsform der Erfindung;
- Figur 9 eine Seitenansicht des Teils einer Fahrzeugkarosserie aus Figur 8 im nicht angelegten Zustand des Sicherheitsgurtsystems; und
- Figur 10 eine Seitenansicht des Teils einer Fahrzeugkarosserie aus Figur 8 im angelegten Zustand des Sicherheitsgurtsystems.

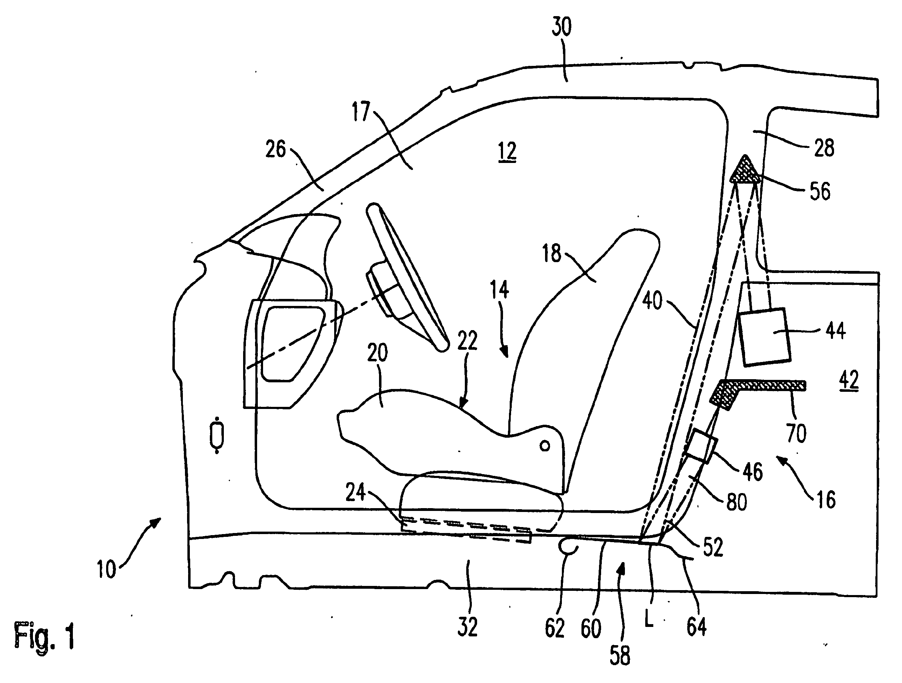

In Figur 1 ist schematisch ein Teil einer Fahrzeugkarosserie 10 zu sehen, die einen Fahrzeuginnenraum 12 umschließt, in welchem sich ein Fahrzeugsitz 14 und ein erfindungsgemäßes Sicherheitsgurtsystem 16 befinden. In der Fahrzeugkarosserie 10 ist eine Türöffnung 17 für eine nicht dargestellte Fahrertür gebildet, welche von einer A-Säule 26, einer B-Säule 28, einem Dachrahmen 30 und einer Türschwelle 32 begrenzt ist. Der Fahrzeugsitz 14 weist eine Rückenlehne 18 und ein Sitzpolster 20 mit einer Sitzfläche 22 auf und ist durch eine Rastschiene 24 verschiebbar mit der Fahrzeugkarosserie 10 verbunden.

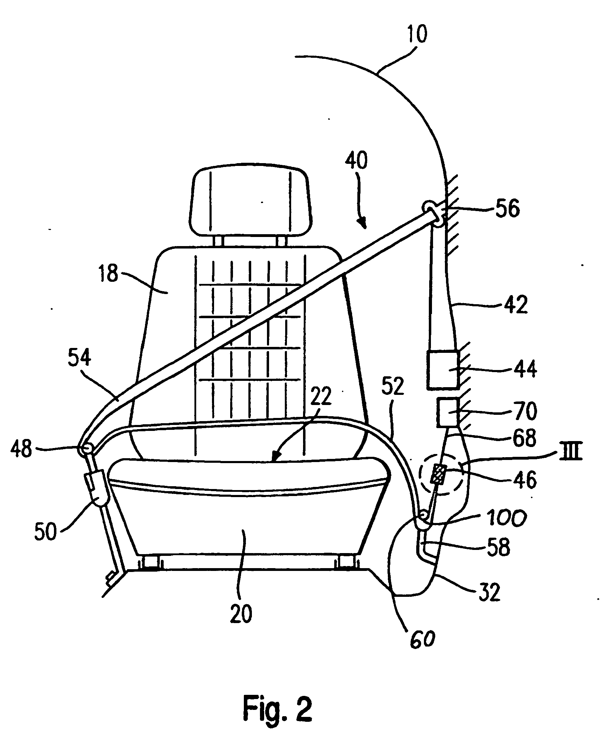

Das Sicherheitsgurtsystem 16 weist einen Sicherheitsgurt 40 auf, der sich von einem an einer hinteren Seitenwand 42 des 2-türigen Fahrzeugs im Bereich hinter der B-Säule 28 befestigten Gurtaufroller 44, der einen Gurtstraffer in Form eines Aufrollstraffers integriert hat, bis zu einem Endbeschlag 46 erstreckt. Der Sicherheitsgurt 40 ist durch eine Steckzunge 48 mit Umlenkbeschlag (Figur 2) für ein Gurtschloß 50 geführt, wobei die Steckzunge 48 den Sicherheitsgurt 40 in einen Beckengurtabschnitt 52 und einen Schultergurtabschnitt 54 teilt. Der Gurtaufroller 44 ist vorteilhafterweise im Bereich einer Seitenwand 42 an der Fahrzeugkarosserie 10 befestigt, so daß er durch eine Seitenwandverkleidung verdeckt sein kann. Der Schultergurtabschnitt 54 ist ausgehend vom Gurtaufroller 44 durch einen an der B-Säule 28 angebrachten Umlenkbeschlag 56 umgelenkt, der einen oberen Lasteinleitungspunkt für den Sicherheitsgurt 40 bildet.

Der Beckengurtabschnitt 52 erstreckt sich seitlich der Oberschenkel des Insassen abwärts um einen an der Fahrzeugkarosserie 10 befestigten Umlenkbügel 58 herum und aufwärts zum Endbeschlag 46. Der Umlenkbügel 58 weist einen im wesentlichen geraden Gleitstangenabschnitt 60 auf, der vom Beckengurtabschnitt 52 umschlungen ist. Der Gleitstangenabschnitt 60 ist um ein Vielfaches länger als die Breite des Gurtbandes, um dem Sicherheitsgurt 40 ausreichend Spielraum für eine Verschiebung des unteren Lasteinleitungspunktes L zu gewähren. Außerdem weist der Umlenkbügel 58 ein schlaufenartig umgebogenes vorderes Ende 62 und ein gekröpftes hinteres Ende 64 auf, mit denen er im Bereich der Türschwelle 32 befestigt ist und zwar so, daß sich der Gleitstangenabschnitt 60 zur leichten Gurtverschiebung im wesentlichen parallel zur Längsachse des Fahrzeugs erstreckt. Damit der Beckengurtabschnitt 52 dem Fahrzeuginsassen ausreichend Halt bietet, muß der Umlenkbügel 58 unterhalb der Ebene der Sitzfläche 22 liegen. Genauer gesagt liegt der Beckengurtabschnitt 52 am stangenförmigen, vorzugsweise im wesentlichen horizontal verlaufenden Abschnitt (Gleitstangenabschnitt 60) des Umlenkbügels an, wobei dieser Abschnitt zur guten Rückhaltung des Beckenbereichs unterhalb der Sitzfläche 22 (Oberseite des Sitzteils des Fahrzeugsitzes) liegt. Mit 100 ist die vom Gurt berührte Umlenkfläche am Gleitstangenabschnitt 60 bezeichnet.

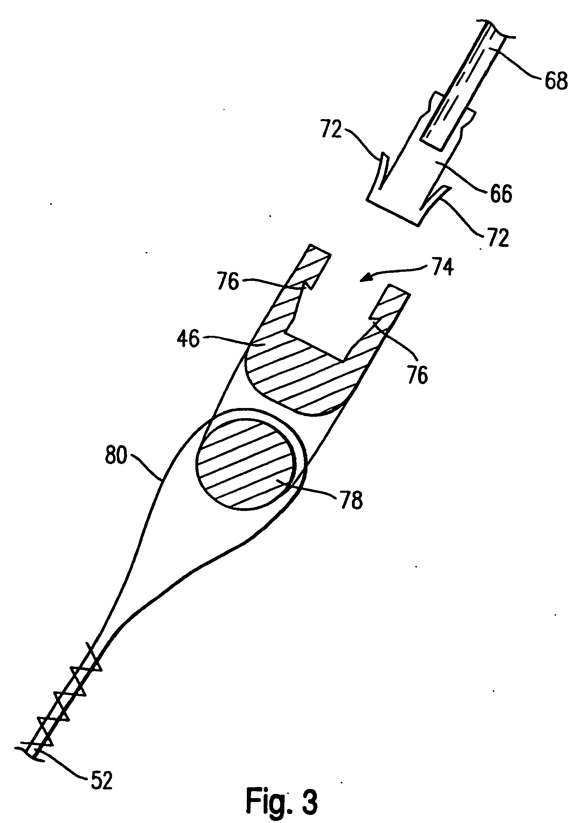

Der Endbeschlag 46, der in Figur 3 detaillierter dargestellt ist, ist über ein Verbindungselement 66 und ein flexibles Zugmittel 68, welches in dieser Ausführungsform aus einem Stahlseil besteht, mit einem linearen Gurtstraffer 70 verbunden, der im Bereich der Seitenwand 42 an der Fahrzeugkarosserie 10 befestigt ist. Das Verbindungselement 66 besteht aus einer Hülse, die über das Zugmittel 68 gepreßt ist und an ihrer Außenseite zwei elastischen Rastnasen 72 hat. Entsprechend weist der Endbeschlag 46 eine Bohrung 74 auf, in welche das Verbindungselement 66 bei der Montage des Sicherheitsgurtsystems 16 eingesteckt werden kann. Beim Einstecken können die Rastnasen 72 in Hinterschneidungen 76 in der Bohrung 74 einrasten, so daß das Verbindungselement 66 vorzugsweise unlösbar mit dem Endbeschlag 46 gekoppelt ist. Die durch das Verbindungselement 66 erreichbare Kopplung ermöglicht es beispielsweise, den Umlenkbügel 58 vor der Montage des Sicherheitsgurts 40 im Fahrzeug zu befestigen.

Die Befestigung des Beckengurtabschnitts 52 am Endbeschlag 46 kann in üblicher Weise vorgesehen sein, beispielsweise indem wie abgebildet das Ende des Beckengurtabschnitts 52 zu einer Schlaufe 80 umgeschlagen und vemäht ist, wobei die Schlaufe 80 einen am Endbeschlag 46 ausgebildeten Steg 78, umschließt.

In Figur 1 ist das Sicherheitsgurtsystem 16 mit nicht angelegtem Gurt gezeigt. Wie deutlich zu sehen ist, ist der Beckengurtabschnitt 52 am Gleitstangenabschnitt 60 in der Nähe des hinteren Endes 64 des Umlenkbügels 58 umgelenkt, so daß er sich im wesentlichen im Bereich der B-Säule 28 zum oberen Umlenkbeschlag 56 erstreckt. Auf diese Weise bleibt die Türöffnung 17 frei, da der Sicherheitsgurt 40 nicht in den Raum zwischen B-Säule 28 und Sitz 14 ragt. Dies ist insbesondere bei einem zweitürigen Fahrzeug vorteilhaft, bei dem der Durchstieg zu den Rücksitzen zwischen B-Säule 28 und vorderem Sitz 14 erfolgt.

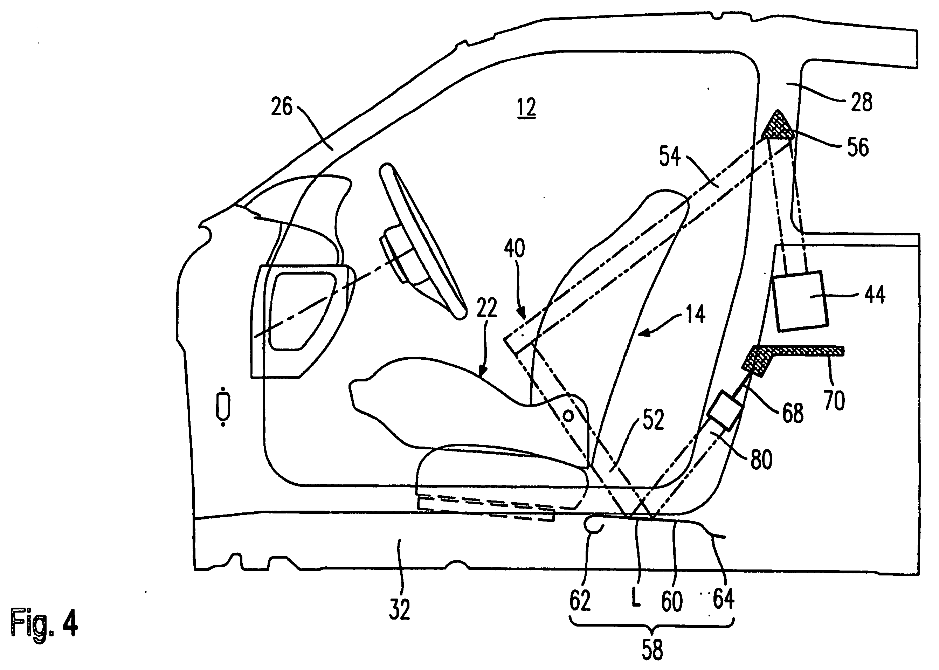

Beim Anlegen des Sicherheitsgurtes 40 (Figur 4) verschiebt sich der untere Lasteinleitungspunkt L am Gleitstangenabschnitt 60 in Richtung zum vorderen Ende 62, so daß im Bereich des Beckengurtabschnitts 52 eine optimale Gurtführung besteht. Da das Zugmittel 68 elastisch ist, wird es durch die Verschiebung des unteren Lasteinleitungspunktes am Umlenkbügel 58 gebogen, so daß das Zugmittel 68 und der Beckengurtabschnitt 52 zwischen unterem Lasteinleitungspunkt L und Gurtstraffer 70 im wesentlichen eine gerade Linie bilden. Dadurch greift die Schlaufe 80 geradlinig am Steg 78 an, d.h. senkrecht zu dessen Längsachse, so daß der Sicherheitsgurt 40 in diesem Bereich gleichmäßig belastet ist.

Durch die Eigensteifigkeit des Zugmittels 68 nimmt dieses nach Ablegen des Sicherheitsgurtes 40 wieder seine ursprüngliche, gerade Gestalt an und zieht den Beckengurtabschnitt 52 am Gleitstangenabschnitt 60 nach hinten, so daß der Sicherheitsgurt 40 wieder in seine Grundstellung in der Nähe des hinteren Endes 64 des Umlenkbügels 58 verschoben wird.

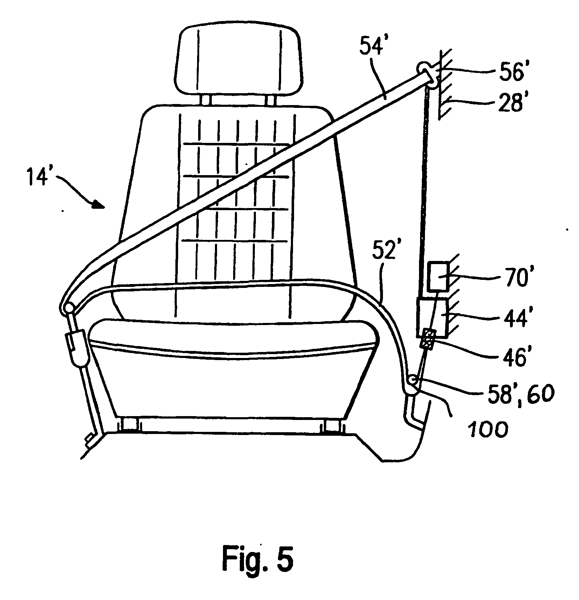

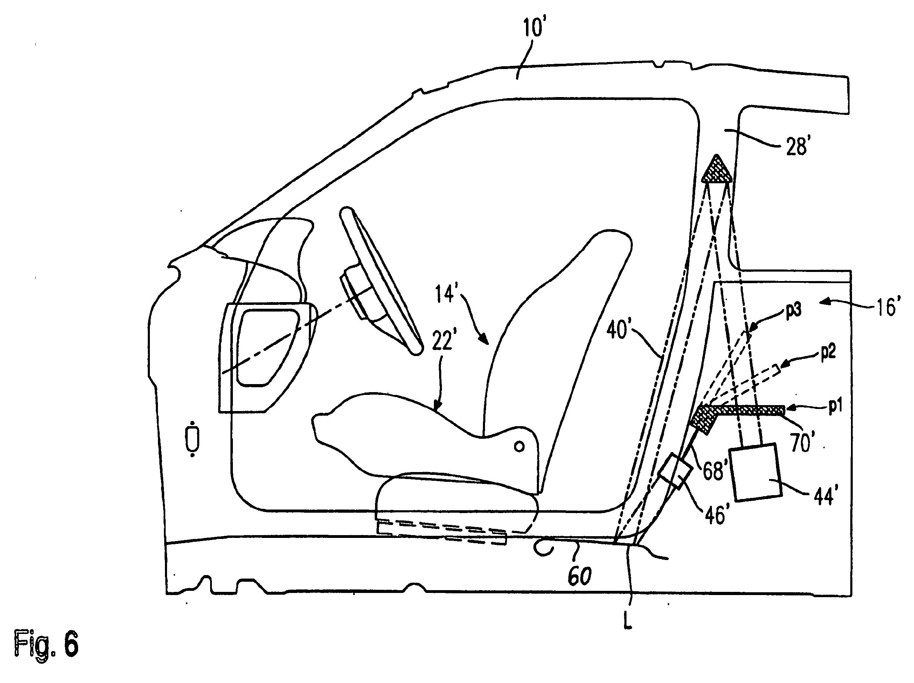

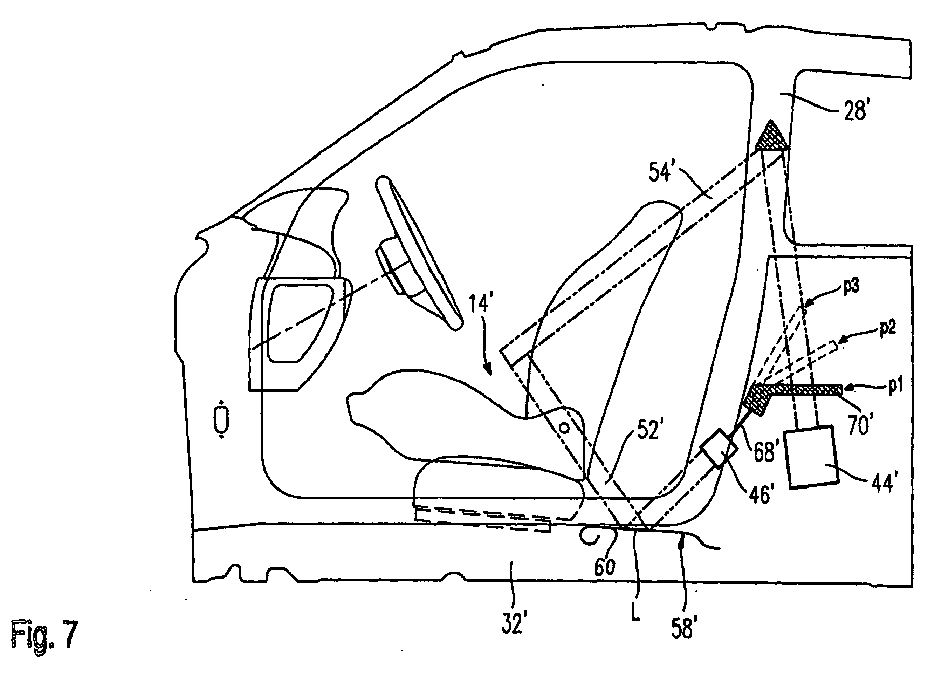

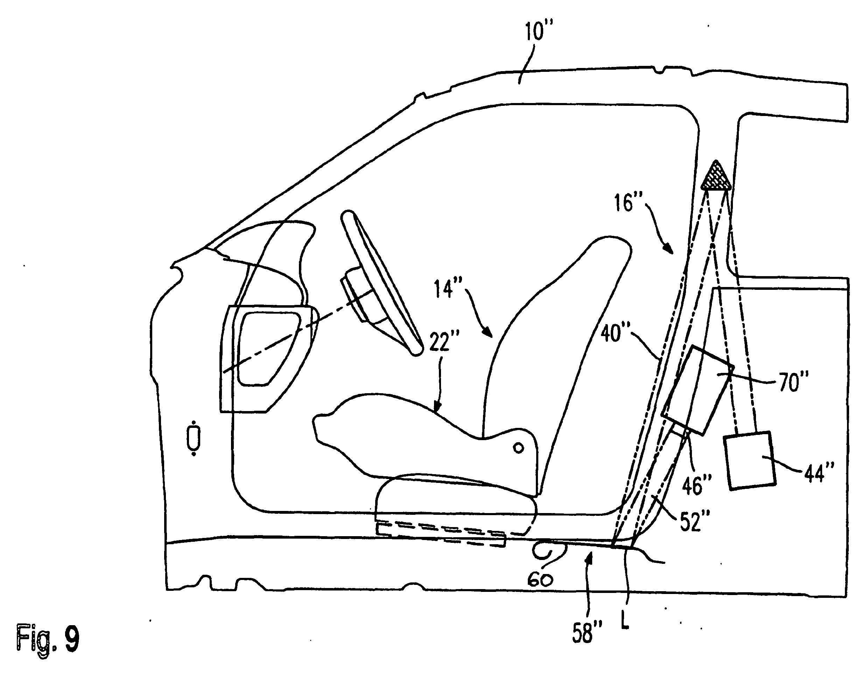

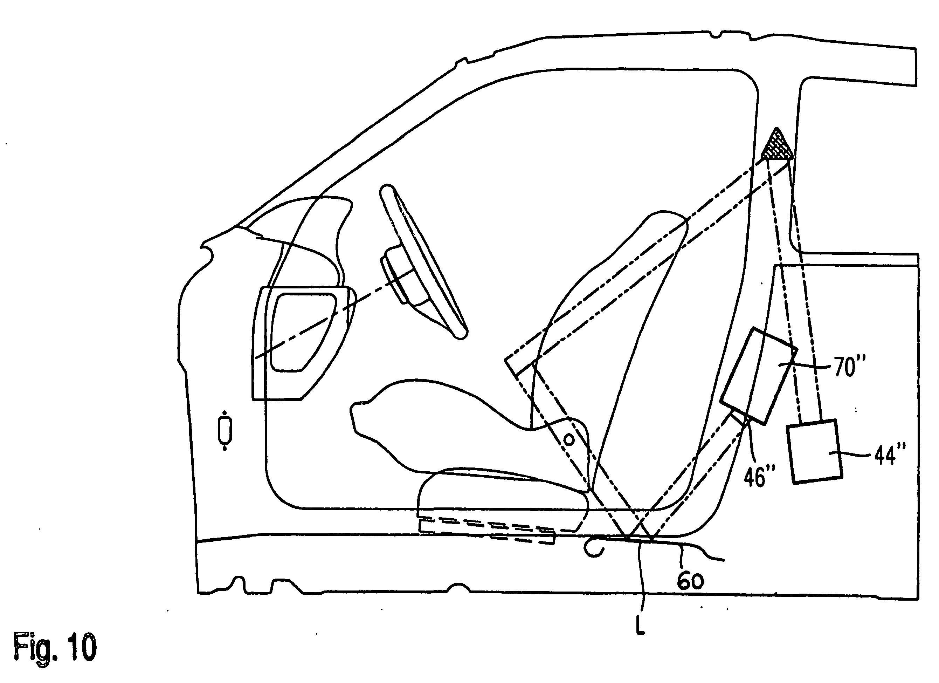

Um einen großen Spielraum bei der Verschiebung des unteren Lasteinleitungspunktes am Umlenkbügel 58 zu erlauben, ist der Gurtstraffer 70 vorteilhafterweise möglichst hoch angebracht, beispielsweise, wie in den Figuren 5 bis 7 und 8 bis 10 dargestellt, oberhalb des Gurtaufrollers 44.

Auch bei einem Verstellen des Sitzes gestattet der Umlenkbügel 58 eine vorteilhafte Verlagerung des unteren Lasteinleitungspunktes. Selbstverständlich eignet sich das beschriebene Sicherheitgurtsystem nicht nur für Vordersitze sondern auch für Rücksitze, ohne daß es eines anderen Aufbaus bedarf, was das Sicherheitsgurtsystem universell einsetzbar macht.

Eine weitere Ausführungsform ist in den Figuren 5 bis 7 dargestellt. In dieser Ausführungsform ist der Gurtaufroller 44' unterhalb des Gurtstraffers 70' angebracht. Dadurch bleibt oberhalb des Gurtaufrollers 44' Platz für verschiedene Einbaulagen p1, p2, p3 des Gurtstraffers 70'. Außerdem ist der Weg zwischen dem durch den Gurtstraffers 70' gegebenen Befestigungspunkt und dem unteren Lasteinleitungspunkt L am Umlenkbügel 58' größer. Bei einer Verschiebung des Lasteinleitungspunktes L ist daher der Winkel, um den das Zugmittel 68' gebogen werden muß, geringer, so daß der Beckengurtabschnitt 52' leichter verschoben werden kann.

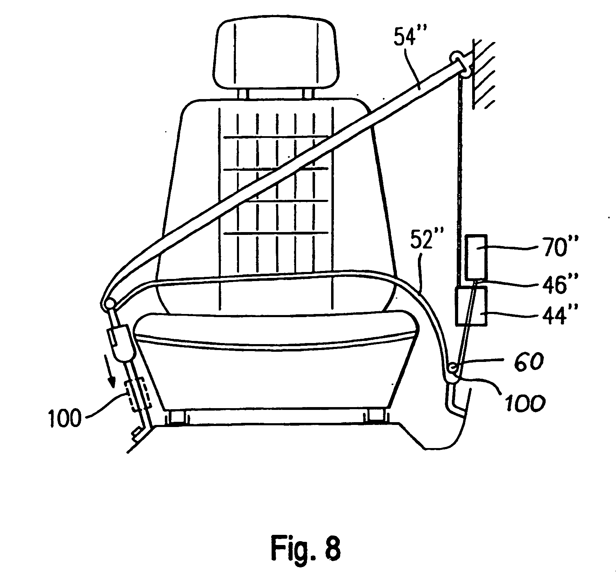

In einer weiteren Ausführungsform, gemäß den Figuren 8 bis 10, ist der End beschlag 46" nicht über ein elastisches Zugmittel, sondern direkt mit dem Gurtstraffer 70" verbunden. Dadurch können das Zugmittel und das Verbindungsglied eingespart werden. Als Gurtstraffer 70" sind alle bekannten Typen geeignet, beispielsweise Linearstraffer wie in Ausführungsform 1, oder Aufrollerstraffer. So ist beispielsweise der Straffer 70" ein Aufrollstraffer, also ein Aufroller ohne Aufrollfeder, der nur im Rückhaltefall arbeitet. Der Endbeschlag wird bei dieser Ausführungsfornn durch die Befestigung des Gurtes 40" im Aufrollstraffer gebildet.

In allen Ausführungsformen ist vorzugsweise vorgesehen, daß der Gurtaufroller mit einem zweiten Gurtstraffer versehen ist, damit eine am Schultergurtabschnitt vorhandene Gurtlose nicht durch die Steckzunge gezogen werden muß, sondern direkt und damit schneller eingezogen werden kann. Mittels der zwei Gurtstraffer, die dann vorhanden sind, lassen sich gute Rückhaltewerte erzielen. Dieser zweite Gurtstraffer muß nicht zwingend ein Straffer am Gurtaufroller 44, 44'. 44" sein, vielmehr kann auch ein Schloßstraffer, wie in Figur 8 mit dem Bezugszeichen 100 versehen, vorgesehen sein.

## Patentansprüche

1. Sicherheitsgurtsystem (16; 16'; 16") mit einem Sicherheitsgurt, der einen Beckengurtabschnitt (52; 52'; 52") hat, welcher mit einem Endbeschlag (46; 46'; 46") verbunden ist, wobei sich der Beckengurtabschnitt um einen am Fahrzeug (10; 10'; 10") befestigten Umlenkbügel (58; 58'; 58") herum zum Endbeschlag erstreckt, der im Fahrzeug höher angebracht ist als der Umlenkbügel, **dadurch gekennzeichnet, daß** der Umlenkbügel so ausgeführt ist, daß der Sicherheitsgurt sich längs des Umlenkbügels verschieben läßt.

2. Sicherheitsgurtsystem nach Anspruch 1, **dadurch gekennzeichnet, daß** am Endbeschlag (46; 46'; 46") ein erster Gurtstraffer (70; 70'; 70") angreift.

3. Sicherheitsgurtsystem nach Anspruch 2, **dadurch gekennzeichnet, daß** der Endbeschlag (46; 46') bei der Montage des Sicherheitsgurtsystems über ein Verbindungselement (66; 66') mit dem Gurtstraffer (70; 70') koppelbar ist.

4. Sicherheitsgurtsystem nach Anspruch 2 oder 3, **dadurch gekennzeichnet, daß** der Endbeschlag (46; 46') über ein flexibles Zugmittel (68; 68') mit dem Gurtstraffer (70; 70') verbunden ist.

5. Sicherheitsgurtsystem nach Anspruch 4, **dadurch gekennzeichnet, daß** das flexible Zugmittel (68; 68') ein Stahlseil ist.

6. Sicherheitsgurtsystem nach Anspruch 4 oder 5, **dadurch gekennzeichnet, daß** das Zugmittel (68; 68') eine solche Eigensteifigkeit hat und so relativ zum Umlenkbügel (58; 58') positioniert ist, daß es den Beckengurtabschnitt (52; 52') beim Ablegen des Sicherheitsgurtes (40; 40') am Umlenkbügel entlang in Richtung einer Grundstellung verschiebt.

7. Sicherheitsgurtsystem nach einem der vorhergehenden Ansprüche, **dadurch gekennzeichnet, daß** ein mit dem Beckengurtabschnitt (52; 52'; 52") verbundener Schultergurtabschnitt (54; 54'; 54") vorhanden ist, der mit einem fahrzeugfesten Gurtaufroller (44; 44'; 44") in Verbindung steht.

8. Sicherheitsgurtsystem nach Anspruch 7, **dadurch gekennzeichnet, daß** ein zweiter Gurtstraffer vorgesehen ist, der am Gurtaufroller (44, 44', 44") vorgesehen oder der als Schloßstraffer (100) ausgebildet ist.

9. Sicherheitsgurtsystem nach einem der vorhergehenden Ansprüche, **dadurch gekennzeichnet, daß** der Umlenkbügel (58; 58'; 58") sich in Fahrzeuglängsrichtung erstreckend verläuft.

10. Sicherheitsgurtsystem nach einem der vorhergehenden Ansprüche, **dadurch gekennzeichnet, daß** der Umlenkbügel (58; 58'; 58") an der Türschwelle (32; 32'; 32") befestigt ist.

11. Sicherheitsgurtsystem nach einem der vorhergehenden Ansprüche, **dadurch gekennzeichnet, daß** der Umlenkbügel (58; 58'; 58") einen Gleitstangenabschnitt (60) hat, an dem der Beckengurtabschnitt (52) unmittelbar anliegt und umgelenkt wird und der unterhalb der Sitzfläche (22; 22'; 22") liegt.

## Claims

1. A safety belt system (16; 16'; 16") comprising a safety belt which has a lap belt portion (52; 52'; 52") that is connected with an end fitting (46; 46'; 46"), the lap belt portion extending around a deflection bow (58; 58'; 58") attached to the vehicle (10; 10'; 10") towards the end fitting, which is mounted in the vehicle at a higher level than the deflection bow, **characterized in that** the deflection bow is configured such that the safety belt can be shifted along the deflection bow.

2. The safety belt system as claimed in claim 1, **characterized in that** a first belt tensioner (70; 70'; 70") engages the end fitting (46; 46'; 46").

3. The safety belt system as claimed in claim 2, **characterized in that** during assembly of the safety belt system the end fitting (46; 46') can be coupled with the belt tensioner (70; 70') via a connecting element (66; 66').

4. The safety belt system as claimed in claim 2 or 3, **characterized in that** the end fitting (46; 46') is connected with the belt tensioner (70; 70') via a flexible traction means (68; 68').

5. The safety belt system as claimed in claim 4, **characterized in that** the flexible traction means (68; 68') is a steel cable.

6. The safety belt system as claimed in claim 4 or 5, **characterized in that** the traction means (68; 68') has such an inherent rigidity and is positioned relative to the deflection bow (58; 58') such that when the safety belt (40; 40') is being unbuckled, the traction means shifts the lap belt portion (52; 52') along the deflection bow towards a basic position.

7. The safety belt system as claimed in any of the preceding claims, **characterized in that** there is provided a shoulder belt portion (54; 54'; 54") which is connected with the lap belt portion (52; 52'; 52") and is in connection with a vehicle-fixed belt retractor (44; 44'; 44").

8. The safety belt system as claimed in claim 7, **characterized in that** a second belt tensioner is provided, which is provided at the belt retractor (44, 44', 44") or is designed as a buckle tensioner (100).

9. The safety belt system as claimed in any of the preceding claims, **characterized in that** the deflection bow (58; 58'; 58") extends in the longitudinal direction of the vehicle.

10. The safety belt system as claimed in any of the preceding claims, **characterized in that** the deflection bow (58; 58'; 58") is attached to the door sill (32; 32'; 32").

11. The safety belt system as claimed in any of the preceding claims, **characterized in that** the deflection bow (58; 58'; 58") has a sliding rod portion (60) which is located below the seating surface (22; 22'; 22"), the lap belt portion (52) being in direct contact with and deflected at the sliding rod portion (60).

## Revendications

1. Système de ceinture de sécurité (16 ; 16' ; 16") comportant une ceinture de sécurité qui a un tronçon de ceinture de bassin (52 ; 52' ; 52") lequel est relié à une ferrure d'extrémité (46 ; 46' ; 46"), le tronçon de ceinture de bassin s'étendant autour d'un étrier de renvoi (58 ; 58' ; 58") fixé au véhicule (10 ; 10' ; 10") vers la ferrure d'extrémité, laquelle est montée dans le véhicule plus haut que l'étrier de renvoi, **caractérisé en ce que** l'étrier de renvoi est réalisé de telle sorte que la ceinture de sécurité peut être déplacée le long de l'étrier de renvoi.

2. Système de ceinture de sécurité selon la revendication 1, **caractérisé en ce qu'**un premier tensionneur de ceinture (70 ; 70' ; 70") s'engage sur la ferrure d'extrémité (46 ; 46' ; 46").

3. Système de ceinture de sécurité selon la revendication 2, **caractérisé en ce que** la ferrure d'extrémité (46 ; 46') peut être accouplée au tensionneur de ceinture (70 ; 70') via un élément de liaison (66 ; 66') lors du montage du système de ceinture de sécurité.

4. Système de ceinture de sécurité selon la revendication 2 ou 3, **caractérisé en ce que** la ferrure d'extrémité (46 ; 46') est reliée au tensionneur de ceinture (70; 70') via un moyen de traction (68 ; 68') flexible.

5. Système de ceinture de sécurité selon la revendication 4, **caractérisé en ce que** le moyen de traction flexible (68 ; 68') est un câble d'acier.

6. Système de ceinture de sécurité selon la revendication 4 ou 5, **caractérisé en ce que** le moyen de traction flexible (68 ; 68') a une rigidité propre telle est positionné de telle sorte par rapport à l'étrier de renvoi (58 ; 58') que lorsqu'on enlève la ceinture de sécurité, il déplace le tronçon de ceinture de bassin (52 ; 52') le long de l'étrier de renvoi en direction d'une position de base.

7. Système de ceinture de sécurité selon l'une des revendications précédentes, **caractérisé en ce qu'**il est prévu un tronçon de ceinture d'épaule (54 ; 54' ; 54") relié au tronçon de ceinture de bassin (52 ; 52' ; 52"), lequel est en liaison avec l'enrouleur de ceinture (44 ; 44' ; 44") solidaire du véhicule.

8. Système de ceinture de sécurité selon la revendication 7, **caractérisé en ce qu'**il est prévu un deuxième tensionneur de ceinture qui est prévu sur l'enrouleur de ceinture (44 ; 44' ; 44") ou qui est réalisé sous forme de tensionneur de serrure (100).

9. Système de ceinture de sécurité selon l'une des revendications précédentes, **caractérisé en ce que** l'étrier de renvoi (58 ; 58' ; 58") s'étend dans la direction longitudinale du véhicule.

10. Système de ceinture de sécurité selon l'une des revendications précédentes, **caractérisé en ce que** l'étrier de renvoi (58 ; 58' ; 58") est fixé sur le bas de marche (32 ; 32' ; 32").

11. Système de ceinture de sécurité selon l'une des revendications précédentes, **caractérisé en ce que** l'étrier de renvoi (58 ; 58' ; 58") a un tronçon à tige coulissante (60) sur lequel le tronçon de ceinture de bassin (52) repose directement et est renvoyé et qui est situé au-dessous de la surface de siège (22 ; 22' ; 22").
